(19) Europäisches Patentamt
European Patent Office
Office européen des brevets

(11) **EP 3 480 753 A1**

(12) **EUROPEAN PATENT APPLICATION**

(43) Date of publication:
**08.05.2019 Bulletin 2019/19**

(51) Int Cl.:
***G06Q 10/06*** *(2012.01)*

(21) Application number: **17199753.9**

(22) Date of filing: **02.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Lstech Ltd**
**Central Milton Keynes, Bucks. MK9 2HR (GB)**

(72) Inventors:
• **LAOUTARIS, Nikolaos**
  **08019 BARCELONA (ES)**
• **SAKELLARIOU, Spyridon**
  **16672 VARKIZA ATTIKI (GR)**

(74) Representative: **Ponti & Partners, S.L.P**
**C. de Consell de Cent 322**
**08007 Barcelona (ES)**

(54) **A COMPUTER IMPLEMENTED METHOD, A SYSTEM AND A COMPUTER PROGRAM FOR OPTIMIZING THE OPERATION OF A CLOUD HOSTED SOFTWARE AS A SERVICE (SAAS) SYSTEM**

(57) The present invention relates to a computer implemented method for optimizing the operation of a cloud hosted SaaS system, the method comprising:
a) monitoring cloud resource usage regarding a cloud provider computing system, to detect cloud resource load consumption;
b) detecting service usage regarding software applications deployed in the cloud provider computing system; and
c) binding the detected cloud resource load consumption with the detected service usage, and determining associated cost contributions based on respective load contributions obtained from said binding, to optimize the operation of the cloud hosted SaaS system based on the determined cost contributions.

The present invention also relates to a computer program and a system both adapted to implement the method of the invention.

**Description**

FIELD OF THE INVENTION

The present invention relates, in a first aspect, to a computer implemented method for optimizing the operation of a cloud hosted software as a service (SaaS) system, based on cost contributions determined from cloud resource load consumption bound with detected services usage.

A second aspect of the invention relates to a computer program adapted to implement the method of the first aspect of the invention.

In a third aspect, the present invention relates to a system adapted to implement the method of the first aspect of the invention.

BACKGROUND OF THE INVENTION

Considering a cloud-hosted service provider, a problem arises regarding how to share the cost of its virtual infrastructure among the offered services and/or the users that use them, in a fair manner. The term cost is generically used in the present document to refer to any kind of cost pertained to a computing infrastructure, such as processing, storage, internal and external transmission cost. It is substantiated given the particular context of a resource; VMs (virtual machines) bear processing cost, disks bear storage cost while local or wide network interfaces bear transmission cost.

The problem of fair cost sharing has been addressed in traditional IP networking infrastructures assuming load measurements both per resource (network link, primarily) and per service/user consuming the resource [1]-[3]. Load measurements are reported per IP packet/flow header and thus consumption per service and user as understood by business can easily (through lookups) be deduced. Indeed, a number of IP network traffic measurement tools like Cisco's NetFlow [4] provide per-flow traffic statistics while a number of datasets with IP traffic traces are publically available.

However, unlike networking infrastructures, in cloud-hosted infrastructures load measurements of cloud resources (VMs, storage entities, egress network services or specialized computing platforms) are provided in a systemic aggregate form. They do not include any semantics pointing to the application/service level contributors incurring the reported load (such as header information in IP traffic measurements). Indeed, available cloud monitoring tools like Google's Stackdriver [5] and Elasticsearch's Metricbeat [6] provide a rich set of system-specific metrics which however are totally unaware of the overlying services/users actually using the monitored resources.

The lack of explicit bindings between application/service and system layers in cloud-hosted service environments is a challenge that makes the problem at hand unique and most intriguing.

Cloud cost analytics for cloud cost management and optimization is an emerging market, as shown in Table 1 for different prior art proposals currently available in the market.

**Table 1**

| Company | Motto | Comments |
|---|---|---|
| Cloud Cruiser [7] | Control your Cloud Spent Accelerate cloud adoption with advanced budgeting. | Acquired by HP in Jan. 2017 |
| Cloudyn [8] | Microsoft Azure Cost Management | Acquired by Microsoft in Jan. 2017 |
| Cloudability [9] | Align your cloud growth with your business. | Participating in Microsoft Ignite |
| Talligent [10] | Multi-cloud Consumption and Cost Management. Simplified. Use the Openbook platform to gather business-critical infrastructure consumption and cost data to better manage OpenStack. | |

Existing commercial solutions rely solely on system information, as provided by available cloud monitoring services, while they mainly address cloud-based enterprises not as-a-service providers per se. The business value of their analytics is mainly exhausted in the distribution of cloud cost among different business functions (departments, cost centers, units) that the subscribed enterprises have, assuming that enterprises utilize a certain amount of cloud resources per business function. And, this is done by simply allowing their client enterprises tag the virtual resources per business function; and, subsequently by distributing the cloud cost per resource and adding the resulting resource cost per business function-tag. Such an allocation of the cloud cost is more useful to large enterprises like banks than to as-a-service providers who are naturally interested in knowing the cost per (groups of) offered service and/or customer.

It is, therefore, necessary to provide an alternative to the state of the art which covers the gaps found therein, by providing a method which really provides such knowledge regarding cloud cost per service and/or customer, in order to optimize the operation of a cloud hosted SaaS system.

SUMMARY OF THE INVENTION

To that end, the present invention relates to a computer implemented method for optimizing the operation of a cloud hosted SaaS system, wherein a SaaS provider computing system is operatively connected as a bridge between a cloud provider computing system and at least one customer computing system, to provide to at least one customer with SaaS services associated at least to software applications deployed in the cloud provider computing system, the method comprising performing the following steps:

a) monitoring cloud resource usage regarding said cloud provider computing system, to detect cloud resource load consumption;
b) detecting service usage regarding said applications; and
c) binding the detected cloud resource load consumption with the detected service usage, and determining associated cost contributions based on respective load contributions obtained from said binding, to optimize the operation of the cloud hosted SaaS system based on the determined cost contributions.

For an embodiment, the method of the first aspect of the invention is applied to a plurality of customers, being provided with the SaaS services through respective customer computing systems operatively connected to the SaaS provider computing system, step b) comprising automatically detecting service usage for each of said customers, and step c) comprising automatically binding the detected cloud resource consumption with the detected service usage for each customer, to determine and associate cost contributions to services and customers.

According to an implementation of the above mentioned embodiment, the method comprises performing step b) by embedding at least one tracking code to service provisioning web pages through which the SaaS is provided to the customers, to capture at least customer identifying information of customers accessing said web pages to track application usage for each customer.

For a preferred embodiment, steps a), b) and c) of the method of the first aspect of the invention are performed as follows:

- step a) comprises obtaining cloud resource load time-series per cloud resource;
- step b) comprises capturing service invocation time-series by customers, including said customer information; and
- step c) comprises aligning said cloud resource load time-series with said service invocation time-series within a common time resolution so that services arrived for execution within this resolution complete their execution within this resolution, and calculating the cost contributions per service and customer based on information available during the intervals of the considered resolution in the aligned time-series.

Preferably, the above mentioned service invocation time-series also includes identifying information regarding the SaaS provider computing system, the service of the SaaS provider computing system invoked by a customer, the time the service was invoked, and the user who invoked the service, including said customer information.

According to an embodiment, the method of the first aspect of the invention comprises performing the cost contribution calculation for different load ranges through respective different cost penalty functions.

For an implementation of said embodiment, the method comprises distributing the cost penalty of the different cost penalty functions among active services of said customers, at least proportionally to their relative presence in the detections performed at step b), according to a proportional sharing approach.

Preferably, the method of the first aspect of the invention further comprises distributing the cost penalty of the different cost penalty functions among active services of the customers, also based on the demand said active services bring to the cloud resources in the detections performed at step b), according to a weighted-proportional sharing approach.

Regarding the above mentioned at least one tracking code, depending on the embodiment it is at least one of a platform-specific service page snippet, a skeleton service page snippet to be completed at the SaaS provider computing system, a service page snippet conveying user UUIDs (universally unique identifiers), and a log-in snippet conveying user UUIDs and email binding.

According to an embodiment, the method of the first aspect of the invention comprises obtaining the above mentioned service invocation time-series by mapping the service invocations into a series of time intervals based on the service invocations chronological order, on their execution time, on a lag between service invocation and execution, and on the length and time location of said intervals.

Regarding the said cloud resource load time-series, they are obtained, for an embodiment of the method of the first aspect of the invention, from measurement data, regarding one or more metrics of one or more of said cloud resources, included in the time intervals.

With respect to the above mentioned optimization of the operation of the cloud hosted SaaS system based on the determined cost contributions at step c), the method of the first aspect of the present invention comprises performing said optimization, wherein said optimization comprises, for some embodiments, at least one of the following actions:

- cloud resource remapping of the detected services;
- improvement of the implementation of services provided by the SaaS provider computing system; and
- reconfiguration of the network connections between the cloud provider computing system and the at least one customer computing system, through the SaaS provider computing system.

For an embodiment, the method of the first aspect of the invention comprises using the information obtained at step c) to detect software bugs and/or intrusion DoS attacks, and based on the results of said detections performing the above mentioned improvement of the implementation of services provided by the SaaS provider computing system.

A second aspect of the invention relates to a computer program, comprising code instructions that when run in one or more processors implement the method of the first aspect of the invention.

A third aspect of the invention relates to a system for optimizing the operation of a cloud hosted software as a service (SaaS) system, wherein a SaaS provider computing system is operatively connected as a bridge between a cloud provider computing system and at least one customer computing system, to provide to at least one customer with SaaS services associated at least to software applications deployed in the cloud provider computing system, the system being adapted to implement the method of the first aspect of the invention, for which purpose the system comprises:

- monitoring means for performing step a);
- detection means for performing step b); and
- processing means for performing step c).

Generally, the system of the third aspect of the invention comprises at least a computing system remotely communicated with the SaaS provider computing system to perform the above described steps of the method of the first aspect of the invention.

The optimization of the operation of the cloud hosted SaaS system is generally performed by the SaaS provider computing system, based on the cost contributions determined at step c) by said computing system remotely communicated therewith. However, for other embodiments, that optimization is performed by one or more of other entities of the cloud hosted SaaS system, together or alternatively to the SaaS provider computing system.

The present invention, in its three aspects, goes far more beyond current commercial offerings both in terms of target and business intelligence. It targets cloud-hosted service providers offering a number of services in the mass market, not just multifunctional cloud-based enterprises, while it allows distribution of cloud cost among the offered services and users/customers using these services, not only among different business functions. The lack, in the prior art proposals, of connecting application/service usage with cloud infrastructure cost is the key differentiating point of the solution provided by the present invention over said prior art proposals. As a result, cloud-hosted service providers are provided with unprecedented intelligence/information regarding the costliness of their service portfolio and/or their clientele, and so on the effectiveness of the maintained virtual infrastructure, which can be optimized at different levels based on said intelligence/information.

The following advantages are provided by the present invention, for different embodiments, underpinned by two major technical/scientific innovations:

➤ automated methods for tracing information about users/customers invoking services from the Web sites of service providers in a transparent and safe manner,

➤ a cost attribution algorithm for sharing cloud cost per set of resources and among (groups of) services, users/customers using these resources in a fair manner, which compared to state-of-art bears the following innovative aspects:

✓ it bridges the gap between application/service and system layers that inevitably exists in cloud environments,

✓ it relies only on resource load measurements without necessarily requiring load measurements per individual service and user/customer consuming the resource,

✓ it is flexible enough to apply different cost sharing policies as appropriate to different types of resources, through simple parameterizations, and

✓ it is capable of self-adjusting critical operational aspects for improving the credibility of the cost sharing results according to the specific dynamics of the particular cloud environment where it applies.

The scalable and efficient implementation that the cost attribution algorithm has for some embodiments, adds to the innovation of the present invention, considering the huge amount of data coming on-line from tracking probes and resource monitoring agents across a multitude of provider Web sites and cloud instances.

BRIEF DESCRIPTION OF THE FIGURES

In the following some preferred embodiments of the invention will be described with reference to the enclosed figures. They are provided only for illustration purposes without however limiting the scope of the invention.

Figure 1 schematically highlights the added value of the present invention compared to available commercial solutions.

Figure 2 schematically shows an informational architecture related to an implementation of the method of the first aspect of the invention, for an embodiment.

Figure 3 shows, by means of several plots, different cloud load ranges and associated load periods, taken into account to implement the method of the first aspect of the invention, for an embodiment.

Figure 4 schematically shows a functional architecture of the present invention, for an embodiment.

Figure 5 shows different processes, (a) and (b), which are included in the method of the first aspect of the invention, for corresponding embodiments, for tracking service invocations from provider Web sites.

Figure 6 shows two flow charts, (a) and (b), outlining a cost attribution algorithm implementing the method of the first aspect of the present invention, for an embodiment.

Figure 7 outlines a suitable "no-active" algorithm for setting the charging granularity in block A of Figure 6(a), according to an embodiment of the method of the first aspect of the invention.

Figure 8 schematically shows a system and functional architecture of both the method and system of the present invention, for an embodiment.

DESCRIPTION OF THE PREFERRED EMBODIMENTS

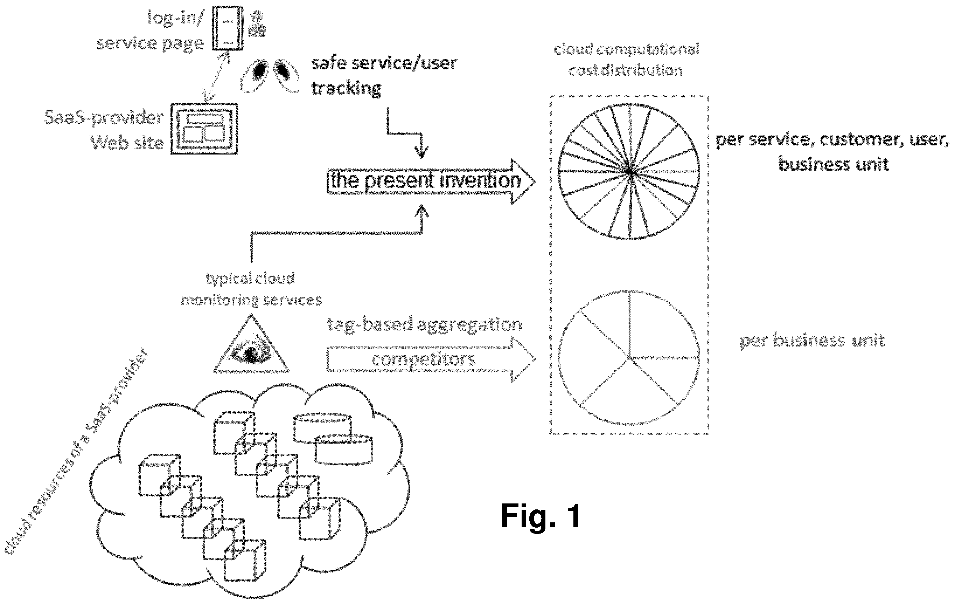

Figure 1 schematically highlights the added value of the present invention compared to available commercial solutions, identified as "competitors" in the Figure.

As shown in Figure 1, available commercial solutions only provide cloud computational cost distribution per business unit, as they only obtain cloud resources consumption of a SaaS provider, using typical cloud monitoring services, and tag-based aggregation techniques.

In contrast, the present invention provides cloud computational cost distribution also per service, customer and user (and also per business unit), by binding to the obtained cloud resources consumption with information obtained by safe service/user tracking, as described above in this document and also below for different embodiments, specifically by adding a tracking code to a web site provided by a SaaS provider to a user through a log-in/service web page.

In the present section, some implementations of the present invention are described, according to specific working embodiments.

In order to allow the understanding of the following description, some notions, terminology, assumptions and the rationale underlying the invention, regarding its main features, for said implementations will be first explained.

*Rationale, Notions and Assumptions:*

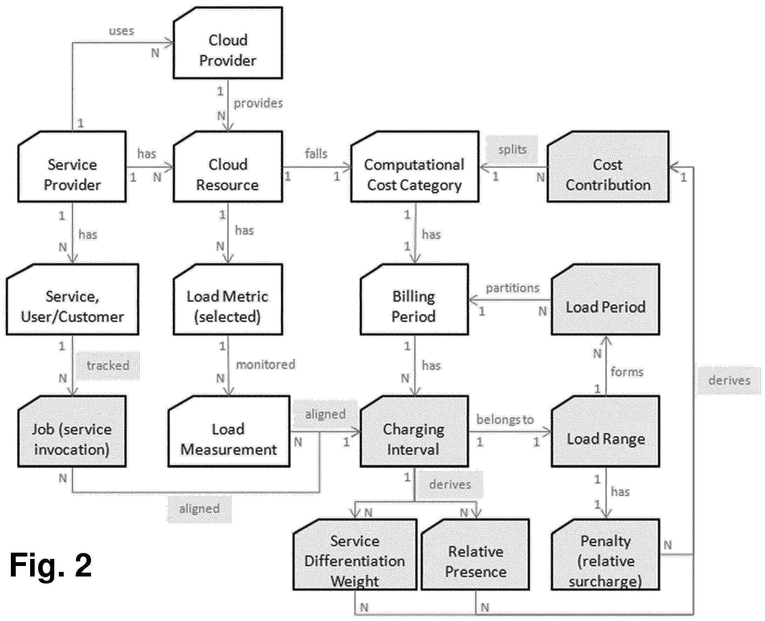

Figure 2 presents the notions and their relationships underlying the present invention highlighting the invention-specific ones. They are defined and discussed in the following.

*Overall:*

In the context of a cloud-hosted service provider, the term job is used to refer to an invocation (actual use) of an offered service by a user. It is assumed that users belong to customers (subscribers, retailers etc.) of the service provider and that such a client hierarchy is included in (or can be deduced from) user semantics. As a result, jobs can be classified into various groups through tags that the service provider can assign to its services, customers and users. Below, in this document, means for safely accounting jobs (services invoked by users/customers) based on the 'tracking pixel' technique are described.

The cloud infrastructure entails computational cost that can fall into certain categories like processing, storage and transmission cost categories. The problem is to derive fair shares of the computational cost of a cloud-hosted service provider over an agreed billing period (or another type of period instead of a billing period, in an equivalent manner), among the jobs arrived during the billing period. The fair proportion of the computational cost per job is called the cost contribution of the job. By aggregating cost contributions per service, user/customer and resource, the cost contributions per groups of business interest (e.g. large customers for a particular type of service) can subsequently be derived; a very useful insight indeed for service providers.

It is taken that there exist reliable monitoring tools for providing load information, in terms of various metrics, for the cloud resources making up the virtual infrastructure of the service provider. Load measurements per resource are produced at a certain granularity, the monitoring granularity.

However, they do not bear any hint to the jobs actually consuming these resources, so the loads per job cannot be known.

Based on the above, two distinct sets of input can be drawn during a billing period: the service usage dataset containing the time-series of the accounted jobs; and, the cloud usage dataset containing the time-series of the load measurement per resource. As already pointed out, these two datasets share no other information linkage but time information. The premise underlying the present invention is that cost contributions depend on respective load contributions and as such, the service and cloud usage datasets need to be logically combined.

*Charging resolution:*

For combining service and cloud usage information, the so-called completion assumption is put forward. It assumes that there is a time resolution, not necessarily of constant length during a billing period (although a different kind of period instead of a billing period could also be used, in an equivalent manner), such that jobs (services invoked by users/customers) falling into this resolution complete their execution within this resolution. This 'job-duration-including' resolution is called charging resolution herein, its granularity charging granularity and the resulting intervals, which equally space the billing period, charging intervals.

The completion assumption is statistically valid considering that resources alternate between idle and busy periods and hence the average busy time could be taken as a charging granularity. As it will become apparent in the following, smaller charging granularities would be more desirable for avoiding coarse aggregations and therefore enhancing differentiation among load and subsequently cost contributions. This issue is elaborated further below, where an algorithm for dynamically adjusting charging granularities is also presented. Without loss of generality, it is taken that charging granularities are multiples of monitoring granularities as the latter are usually configurable in the order of seconds.

Under the completion assumption, jobs arrive and complete in charging intervals and therefore the load during these intervals can be attributed solely to them. In other words, the active jobs in the infrastructure per charging interval are that arrived during the charging intervals (no other jobs from previous intervals) and so these jobs induce the measured resource load. Note that resource loads during charging intervals can be derived by suitably aggregating the measured loads over the contained measurement intervals.

*Load ranges and penalties:*

A parametric peak-load cost sharing scheme [2] is adopted herein, considering that resources may become more expensive during higher loads, especially when reaching their capacity since upgrade cost needs also be taken into account. Cost contributions should therefore be differentiated on the extent to which jobs happen to form peak resource loads rather than just being analogous to their respective loads -even when loads per job could be accurately measured. To this end, it is considered that resources operate into certain load ranges with a cost penalty being assigned to each load range. Load ranges and penalties are defined per resource type e.g. VM, storage or egress network. They are transparent to the service providers, considered as controlled parameters of our solution approach.

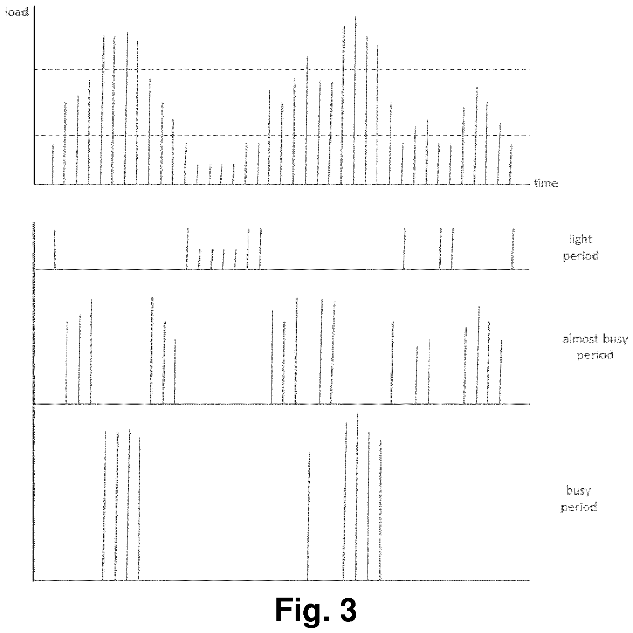

Load ranges can be defined either statically, based on pre-determined thresholds or dynamically, based on percentile values. For example, CPU utilization measurements of a VM could be split into the static ranges of {[0,40), [40,60), [60, 80), [80,100)} or into the dynamic ranges of {[0-25th), [25th-50th), [50th -75th), [75th-100th] percentiles} containing all, the top 75%, 50% and 25% measurements, respectively. It is deemed that static/dynamic ranges are more suitable for finite/infinite capacity resources like VMs or egress network, respectively. Considering a specific resource, charging intervals can then be enlisted into the defined load ranges according to their aggregate measured loads and hence the billing period can be partitioning into load periods (Figure 3). For example, there could be lighter, light, moderate or busy periods. In the simplest case, a single load range and therefore period could be defined, which could either reflect the busy period of the resource, containing loads above a certain threshold or percentile, or encompass the whole billing period, containing all load values.

The so-defined notions of load ranges and corresponding periods are flexible enough to capture different types of resources and computational cost; thus, allowing our approach to apply to changing cloud provider policies through simple parameterization. Evidently, load periods have random durations within billing periods depending on how many charging intervals happen to belong to the defined load ranges.

Cost penalties are assigned to charging intervals for reflecting the relative surcharges of operating in a charging interval of a particular load range. They are defined as fixed or load-dependent weights biasing heavier load ranges. For instance, considering four load ranges, cost penalties could be fixed to {1, 2, 4, 8}, correspondingly, or given by the function $a^{load}$ for increasing base values a's (>1) per load range. Note that dynamic load ranges do not necessarily admit load-dependent penalties; fixed penalties could be given based on suitable functions of the loads at the ends of the ranges. Fixed penalties differentiate cost solely per load range (different loads within a range are considered insignificant) while load-dependent penalties differentiate cost both per range and load therein.

The penalties per charging interval of the same load period can be added to yield the penalty of the load period throughout its duration. Load periods can then be seen as rectangles having as area their penalty and length their duration. And so, under the perspectives of peak-load sharing, the cost of a resource can be split among them according to their area (penalty) proportion.

*Proportional and weighted-proportional sharing:*

Having differentiated the cost of operations of resources by means of suitable load periods and associated cost penalties, the cost contribution of a job at a particular resource is set to its fair proportion of the cost penalties throughout the load periods considered. Two expressions can be distinguished: average per interval or per load period as a whole. More specifically, cost contributions at a resource are the fair penalty contributions averaged over all considered charging intervals or load periods. Below in this document, the differences between these two expressions are elaborated.

In the absence of explicit load information per job, two schemes of fairness are considered: the proportional and the weighted-proportional sharing schemes.

Under proportional sharing, fairness is taken to be the relative presence (appearance frequency) of the jobs. As a result, jobs with higher presence during heavier periods are given larger cost contributions provided that the heavier periods are long enough. If the heavier load periods are rather short, cost contributions are merely analogous to frequencies provided that the lighter range penalties do not differentiate substantially among each other.

Under weighted-proportional sharing, jobs are not differentiated only on how frequently they use the resources but also on the demand they bring to the resources. That is, whereas in proportional sharing jobs are assumed to bring the same demand, implying that they cost the same, in weighted-proportional sharing jobs are taken that they bring different demands and therefore their cost should be accordingly differentiated. Under the completion assumption, the load of a resource during a charging interval is the sum of the demands of the active jobs during this interval. This gives rise to a system of linear equations that will be shown below, one for each charging interval, through which the demand of the jobs may be calculated. Depending on when conditions of unique solutions emerge, job demands may be calculated per service or per service and user/customer. This system of linear equations is called herein the job demand equations and the solutions service differentiation weights.

Then, under weighted-proportional sharing, fairness is taken to be the relative service weight of the jobs. As a result, jobs with higher weights (service demand) are given larger cost contributions provided that all jobs have more or less the same presence profile. Should jobs have different profiles, their cost contributions should be analogous to their total weight (total demand) -product of their presence and weight. Obviously, when all jobs have the same weight weighted-proportional sharing reduces to proportional-sharing.

*Discussion:*

The previous sharing schemes are necessitated by the fact that there are no explicit load measurements per job at cloud resources; and, constitute an innovation of the present invention. Should the loads per job were known in advance fairness could be based on the relative loads of the jobs or the Shapley value [3] of the coalition of all jobs averaging individual load increments.

One might argue that presence is incidental and as such the derived cost contributions will be incidental too and thus of limited credibility. However, the completion assumption makes presence the mere causality of resource loads i.e. the jobs found present during a charging interval induce the measured load and only those. Furthermore, by averaging presence over the billing period its incidental nature becomes as that of a statistical estimator of means. Hence, the present invention makes presence acquire significance.

The credibility of the present invention is rather subject to the validity of the completion assumption than to the variability underlying presence or the estimation of service differentiation weights. An automated procedure for dynamically adjusting the charging granularity so that the completion assumption be in increased level of confidence is discussed and described below in this document.

The notions of load ranges and penalties are powerful and flexible enough to support different peak-load sharing policies as appropriate for the particular types of resources. Furthermore, by grounding cost differentiations on penalties per load range and not on individual load measurements, errors due to statistical deviations can be smoothed out. These two aspects are in contrast to existing cost sharing schemes which mainly address a single type of resources while they rely directly on load measurements per resource contributor (traffic of transmission links). Being more general, the present invention reduces to the existing ones if individual load measurements exist, by considering one load range (encompassing the whole billing period or its heavier-load part) and load-dependent penalties given by the identity function.

Last, it is stressed that the present invention targets at sharing cloud cost per billing period, not to assert on the costliness of (different groups of) jobs. For this, a statistical analysis would be required to complement the cost attribution algorithm of the present invention.

Functional Architecture

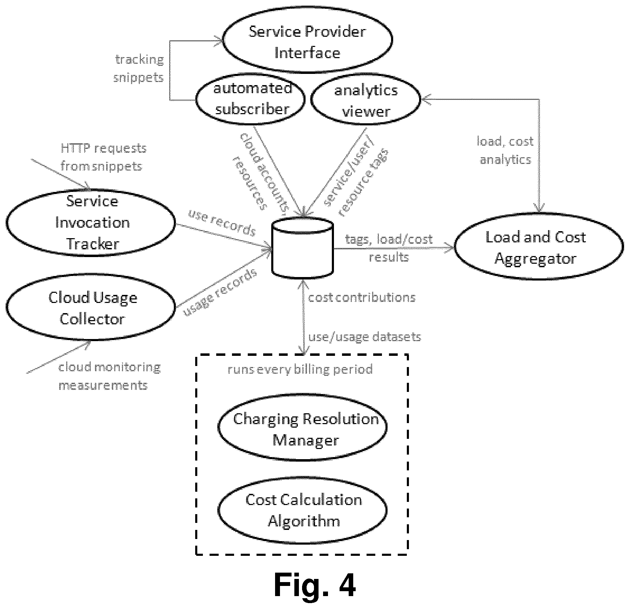

Figure 4 summarizes the previous analysis by presenting the functional components making up the present invention, which are put into perspectives in the following sections.

Through the Service Provider Interface, cloud-hosted service providers provide information about the cloud they maintain and subsequently they can view analytics on the cost of their operations per groups of interest of the services they offer, the users/customers they support and the cloud resources they employ. The Service Invocation Tracker captures service invocations from the Web sites of the service providers based on the 'tracking pixel' technique while the Cloud Usage Collector ingests load measurements for the cloud resources of the service providers by relying on available monitoring APIs such as Stackdriver [5] and Metricbeat [6].

The Charging Resolution Manager and Cost Calculation Algorithm realize the intelligence for deriving fair cost shares per service, user/customer and resource. They are invoked during and, of course, at the end of each billing period (or another type of period instead of a billing period, in an equivalent manner) with the former component to determine the length of the charging granularity and align within it the collected service and cloud usage traces, and the latter component to calculate the fair cost contributions. The Load and Cost Aggregator performs cost aggregations across various groups of services, users/customers and resources as required by the service providers.

Tracking Service Invocations by Users:

Service providers are considered to offer an automated service provisioning Web site for presenting their service offerings in the Internet and allowing users to subscribe and subsequently use the offered services as and when they wish. In such a site, besides informational and subscription management pages, there is a log-in page for ensuring proper user access and a number of service pages for allowing users to use the services. According to the Web technology, the pages are supplied by the site and execute for rendering at the Web browsers of the users.

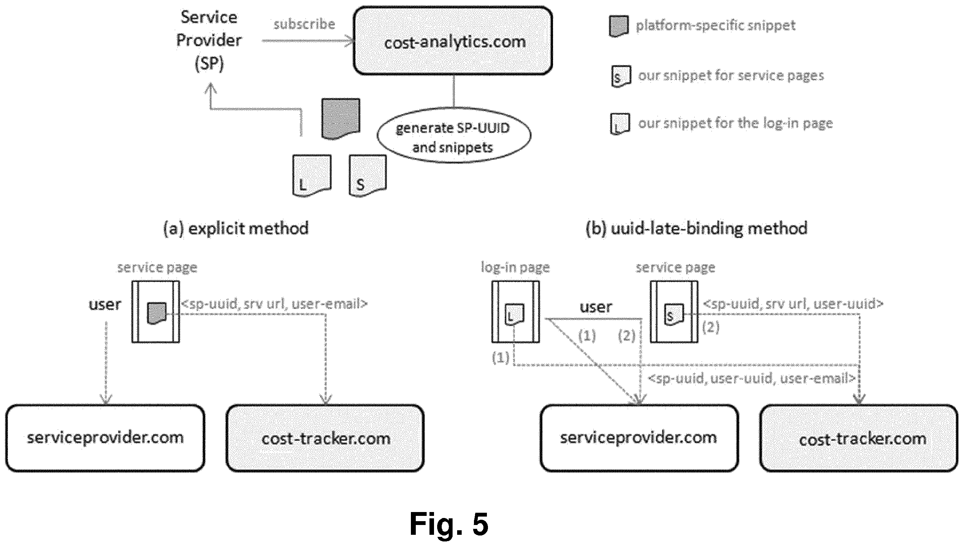

Figure 5 sketches the processes employed for tracking service invocations in service provider Web sites. They rely on the 'tracking pixel' technique and are described in the following.

A snippet (piece of code, called in a previous section "tracking code") is provided to SaaS providers upon subscription to the service provided by the present invention (usually through a computing system remotely communicated with the SaaS provider), that is called "cost analytics" in the present document (and accessed through Webpage "cost-analytics.com" for the embodiment of Figure 5), for them to embed it into their service pages (such as "serviceprovider.com"). The snippet requests the fetching of a tiny image, a pixel, from a Web site ("cost-tracker.com") of ours (where "ours" refer to the remote computing system providing the subscribed service), piggy-bagging, in the HTTP request, the required service invocation information:

- Provider that subscribed to cost analytics.
- Service of the provider invoked by a user.
- Time the service was invoked.
- User who invoked the service, including customer information.

The first three elements can easily be provided by the snippet. However, user information cannot be provided because it is usually missing from the service pages. Ideally, user information should also bear information about the customer of the provider to whom the user belongs. Email is a suitable piece of such information as customer information could be deduced by the domain name (after @) of the users who log-in with their corporate email.

Provider information is included in the snippet at the very time it is created. Indeed, upon subscription of a service provider to cost analytics, a UUID (universally unique identifier) is generated and bound to the provider; and so, the snippet can have this UUID in the redirections (pixel-fetching HTTP requests) it issues. Service information is just the URL of the service pages where the snippet will be embedded while service invocation timestamps can be drawn when the snippet executes at user browsers or when the redirections are received by the Web site ("cost-tracker.com") of the remote computing system providing the service. User information is known to the Web site ("serviceprovider.com") of the service provider (being a standard part of session information) but usually it is solely kept for session management purposes -it is not copied into the supplied pages. For capturing user information, two processes are provided: an explicit and a UUID-late-binding method.

In the explicit user tracking process (Fig. 5(a)), a number of platform-specific snippets are provided as appropriate to industry-wide adopted Web site development or content management systems. For completeness, a skeleton snippet is also provided targeting those service providers willing to provide the required user information based on their own efforts.

The UUID-late-binding process (Fig. 5(b)) for tracking user information evolves in two phases, requiring two kinds of snippets: one for the service pages and one for the log-in page. Both snippets cause redirections (pixel-fetching requests) to the Web site ("cost-tracker.com") of the remote computing system providing the service. The service page snippet conveys user UUIDs which are generated when the snippet executes at user browsers alongside provider, service and time information as previously specified. The log-in snippet conveys the binding between user UUIDs and emails. It generates user UUIDs at user browsers - guaranteed to be the same with the ones generated by the service page snippet- while it extracts the emails of the users from the log-in page, assuming of course that users log-in with their emails. Since the redirections from both snippets are received by the remote computing system providing the service, user UUIDs and emails can be bound. Considering that users cannot access service provider Web sites (such as "serviceprovider.com") without having logged-in before, user UUID-email bindings can occur pretty soon, within a day per user. For reducing the volume of redirections, the log-in page snippet could save the emails of the users in the local storage of their browsers so that to send binding redirections only when the emails are not found in the storage.

To exemplify the above and demonstrate the inseparable role of the tracking subsystem, let Joe be an employee of acme.com who have subscribed to the services offered by saasservice.com. The email of Joe is joe@acme.com and using this email logs in saasservice.com in order to use the services that wishes. The log-in page of saasservice.com has, among other e.g. authentication functionality, the tracking code (snippet). Then, the tracking code passes to the tracking server (of the remote computing system providing the subscribed service) the domain, i.e., acme.com of Joe along with a UUID uniquely identifying Joe. The domain corresponds to a particular customer of saasservice.com, in this example acme.com, and the email to a specific user of this customer. From then on, whenever Joe hits a service of saasservice.com, his UUID will be snipped to "us" (i.e. to the remote computing system providing the subscribed service) and bound with his previously accounted employer domain. This way the computing system providing the subscribed service (and hence, implementing the present invention) will know that any extra load induced on the cloud layer can be attributed to Joe of acme.com and other similarly-traced users; and, thus the portion of its cloud cost that corresponds to Joe and/or acme.com in particular can be provided to saasservice.com.

Summarizing, the following kinds of snippets are provided:

- Platform-specific service page snippets.
- A skeleton service page snippet to be completed by providers.
- A service page snippet conveying user UUIDs and a log-in snippet conveying user UUID and email binding.

The specified tracking solutions are secure and workable, since a) their underlying redirection (pixel-fetching) logic is actually served by the service provider Web sites which are considered trustworthy among their users, and b) they avoid explicit use of cookies which could be deprecated by users or browsers for privacy protection reasons. The solutions will not work if users suppress code execution in their browsers or the loading of images through plain HTML requests from remote domains. However in these cases a great deal of Web functionality is essentially lost.

The Cost Attribution Algorithm:

*Input Information:*

The cost attribution algorithm runs at the end of each billing period (or, instead, of any other chosen period, in an equivalent manner) for calculating cost contributions per service, user/customer and cloud resource of a service provider. It can also run at any point before the end of a billing period (or chosen period) to provide partial results up to that point. Its input information for a specific service provider is outlined in Table 2 and described in the following.

**Table 2: Input information for the cost attribution algorithm**

| per service provider | |
| --- | --- |
| **per billing period** | **data fields (keys underlined)** |
| Service Usage Dataset | (service, user/customer, time) |
| Cloud Usage Dataset | (resource, metric, time, measurement) |
| Tags | (service, [tag1...]) |
| | (user/customer, [tag1...]) |
| | (resource, [tag1...]) |
| Algorithmic Settings | charging granularity |
| | (resource type, metric, [load range1...]) |
| | (resource type, metric, penalty type, [penalty1...] \| penalty function (x)) |
| | (service type, lag, shift) |
| **overall configuration information** | **data fields (keys underlined)** |
| Resources and Metrics | (cloud provider, resource type, metric, metric type, monitoring granularity) |

The Service *Usage Dataset* includes the traces of service invocations by users during a billing period as captured by the tracking system:

(*service, user/customer, time*)

It is assumed that user information includes information of the client-hierarchy of the service provider; though not required by the algorithm as such, it is useful for aggregating the produced cost contributions at application/service level.

The *Cloud Usage Dataset* includes load measurements -for pre-determined metrics- of the chargeable cloud resources in the infrastructure of the service provider during a billing period:

(*resource, metric, time, measurement*)

This information is collected through reliable cloud monitoring services like Stackdriver [5] and Metricbeat [6], which can take and report measurements at configurable granularities.

It is assumed that cloud resources are of certain general types (VM, disk, network etc.) and that the semantics of a resource include both its type and its unique identification (id) in the cloud infrastructure of the service provider.

$$resource := <resource_{type}> : <resource_{id}>$$

Resource type information is necessary for accordingly differentiating algorithmic settings (see below) while it is also useful for providing an additional level of results aggregation. The id of a resource could either be its instance id as given by the cloud provider or a characteristic name given by the service provider. The set of resources of a service provider is drawn automatically from the cloud provider at subscription time through appropriate APIs and it is continuously updated from monitored data since resources are elastic both in its type and number.

A resource has a number of metrics reflecting different types of computational cost. E.g. a VM encompasses processing cost through its CPU utilisation and RAM usage metrics, or transmission cost through the number of bytes input or output from its interfaces. Therefore, the metrics required by the algorithm are only a small subset of the plethora of the metrics provided by the available monitoring services. The metrics as reported by the monitoring services are distinguished as being: gauge, delta or cumulative. Obviously, this information is required by the algorithm for performing needed aggregations. The types of resources, the metric(s) to measure, their type and the respective monitoring granularities are known in advance per cloud provider, constituting part of the overall configuration of the cost sharing algorithm:

(*cloud provider, resource type, metric, metric type, monitoring granularity*)

$$metric\ type := gauge\ |\ delta\ |cumulative$$

Tags include a set of tags/labels per individual service, user/customer and resource which are freely assigned by the service provider for enabling analytics per business group of interest:

(*service, [tag1,..]*)
(*user/customer, [tag1,..]*)
(*resource, [tag1,..]*)

Tagging information is required for aggregating cost contributions over services, users/customers and resources (described below); it is transparent to the core of the cost attribution algorithm that derives the individual cost contributions.
Algorithmic settings provide appropriate values for the controlled parameters of the cost attribution algorithm, which based on the discussion provided above in the present document, include the charging granularity, resource load ranges and associated cost penalties:

charging granularity (*in seconds*)
(*resource$_{type}$,metric, [load_range1,.., load_rangeR]*)
(*resource$_{type}$,metric, penalty type, [penalty1,.., penaltyR] or penalty$_{function}$(x)*)

As the charging granularity can be adjusted dynamically (as will be described below), the input value specifies its initial value; an indicator could also be passed as to whether to stick with the initial value or not. As outlined previously in the present document, load ranges can be specified either in absolute or relative terms while penalties could be fixed or load-dependent:

$$load\ range := number\ |\ percentile$$

$$penalty\ type := fixed\ |\ load - dependent$$

In addition, algorithmic settings may include information for allocating invoked services to charging intervals should such information can be provided (described below):

(*service type, lag, shift*)

*Notation:*

Considering a cloud-hosted service provider, let:
$e$      denote a chargeable resource.
$M_e$      be the set of metrics of a specific chargeable resource e.
$T_B$      be the duration of a billing period, in seconds, or the duration from the start of the current billing period until the time the algorithm is called to run.
$T_C$      be the fixed duration of a charging interval, in seconds.
$C_B$      be the number of charging intervals during a billing period; obviously, $C_B = T_B/T_C$
$I_t$      denote a specific charging interval (of length $T_C$) during a billing period, $t = 1..C_B$.
$^{e,m}l(t)$      be the aggregate measured load of metric $m$ at resource $e$ during the charging interval $I_t$, $t = 1..C_B$; it is calculated based on the time-series of the respective measurements as specified below.
$^{e,m}R$      be the number of load ranges defined for metric m at resource e.
$^{e,m}r(t)$      be the load range, 1.. $^{e,m}R$, to which the charging interval $I_t$, $t = 1..C_B$ belongs according to the load of metric m at resource e during this interval, $^{e,m}l(t)$.
$^{e,m}Cr$      be the number of charging intervals belonging to the load range $r = 1..^{e,m}R$ defined for metric $m$ at resource $e$ -these intervals make up the corresponding load period; obviously,

$$^{e,m}C^r = \sum_{t:\,^{e,m}r(t)=r} 1 \qquad\qquad r = 1..\,^{e,m}R$$

$$C_B = \sum_r \,^{e,m}C^r$$

$^{e,m}p^r(t)$   be the penalty in the cost of operating in the charging interval $I_t$, $t = 1..C_B$ that belongs to the load range $r = 1..\,^{e,m}R$ defined for metric $m$ at resource $e$; as stated previously in the present document, it can either be fixed and therefore constant throughout the intervals of the same load range, say $^{e,m}p^r$, or dependent on the load of the interval.

$^{e,m}p^r$   be the total penalty in the cost of operating throughout the load period $r = 1..\,^{e,m}R$ of metric $m$ at resource $e$; obviously,

$$^{e,m}p^r = \begin{cases} ^{e,m}C^r \; ^{e,m}p^r, \, if\ penalties\ are\ fixed \\ \displaystyle\sum_{t:\,^{e,m}r(t)=r} {}^{e,m}p^r(t), \, if\ penalties\ are\ load-dependent \end{cases} \quad r = 1..\,^{e,m}R$$

$V(t)_{s,u}$   be the number of active instances of service s invoked by user $u$ during the charging interval $I_t$, $t = 1..C_B$; it is calculated based on the time-series of the traced service invocations (see description above) as specified below in the present document.

$V(t)$   be the total number of active instances of all services and all users during the charging interval $I_t$, $t = 1..C_B$; obviously,

$$V(t) = \sum_{s,u} V(t)_{s,u} \qquad\qquad t = 1..C_B$$

$^{e,m}V^r_{s,u}$   be the number of active instances of service $s$ invoked by user $u$ during the load period $r = 1..\,^{e,m}R$ of metric m at resource $e$; obviously,

$$^{e,m}V^r_{s,u} = \sum_{t:\,^{e,m}r(t)=r} V(t)_{s,u} \qquad r = 1..\,^{e,m}R$$

$^{e,m}V^r$   be the total number of active instances of all services and all users during the load period $r = 1..\,^{e,m}R$ of metric $m$ at resource $e$; obviously,

$$^{e,m}V^r = \sum_{s,u} \,^{e,m}V^r_{s,u} \qquad\qquad r = 1..\,^{e,m}R$$

$^{e,m}\beta_{s,u}$   be the service differentiation weight of service s and user $u$ at resource e for metric $m$; it is a calculated as specified below in the present document.

$^{e,m}w_{s,u}$   be the cost contribution of service s invoked by user $u$ with respect to the consumption of a metric $m$ at resource e; this is the main outcome of the cost attribution algorithm and it is calculated as specified below in the present document.

*Service Usage Aggregation:*

For determining the active jobs (services invoked by users) per charging interval, $V(t)_{su}$, the captured service invocations need to be mapped into the series of charging intervals in a way to ensure chronological ordering as well as the underlying completion assumption (describe above); the jobs allocated to a charging interval need to complete execution during this interval. Furthermore, the mapping needs to take into account the fact that there might be a lag between job invocation and execution. The following parameters are considered:

*lag_s,*   be the time elapsed from when a job of service s is invoked until the job starts executing.

*shift_s*   be the minimum time of execution of a job of service s at a resource; in other words, a job is allocated at a charging interval if its admission time (invocation plus lag) is before its shift from the interval end, otherwise the job is allocated to the next charging interval.

Then, considering a job of service s which is invoked at time t, the charging interval during which the job will be considered active in the infrastructure is given by:

$$(t + lag_s) \xrightarrow{\substack{charging \\ granularity}} I_t = [st, et)$$ (1a)

$$charging\ interval\ of\ {}^e job_s = \begin{cases} I_t, & if\ t + lag_s \le et - shift_s \\ I_{t+1}, & if\ t + lag_s > et - shift_s \end{cases}$$ (1b)

Using the above formula, the jobs invoked during a billing period are allocated into an appropriate charging interval during which they complete their execution. Then, the number of active jobs in each charging interval $V(t)_{s,u}$ can be calculated by a simple counting function.

The *lag,shift* parameters are considered as meta-data that should be provided by the cloud-based service provider who has an intimate knowledge of the services that provides. This information could be captured by means of a simple questionnaire during subscription. If this information cannot be provided, the parameters will default to zero.

The above assume that accounted invocation times precede execution times, meaning that *lag* > 0. This could be the case of non-blocking service invocations e.g. when services are invoked through Restful APIs. However, if services are invoked in a batch-mode then the service page will return to the users after the execution of the invoked service and as such, accounted invocation times will follow execution times, in which case *lag* < 0. In any case and given the absence of such intimate information, it all boils down to appropriately setting the length of the charging intervals; suitable self-adjusting means for appropriately setting the charging granularity is described below in the present document.

*Cloud Usage Aggregation:*

Consider a charging interval, $I_t$ = [*st, et*) and the set of the measurements of a metric m at resource e that fall into this interval including the measurement at its right- end, in increasing time order, say

$$\{(t_1, l_1), .., (t_k, l_k), \qquad (t_{k+1}, l_{k+1})\}$$

It is assumed that the charging granularity is at multiples of the monitoring granularity, say k times, so we have:

$$st = t_1 < t_2 < .. < t_k < t_{k+1} = et$$

$$t_{2-}t_1 = .. = t_{k+1} - t_k \triangleq \Delta$$

Then, the aggregate measured load during the charging interval $I_t$ which encompasses *k* monitoring intervals, is given as follows, depending on the type of the monitored metric.

*metric is gauge:*

$$^{e,m}l(t) = \frac{\sum_{j=2}^{k+1}(t_j - t_{j-1})l_j}{et - st} = \frac{\sum_{j=2}^{k+1} l_j}{k}$$ (2a)

*metric is cumulative:*

$$^{e,m}l(t) = l_{k+1} - l_1$$ (2b)

*metric is delta*:

$$^{e,m}l(t) = \sum_{j=2}^{k+1} l_j \qquad\qquad (2c)$$

As the charging intervals are taken to be left-closed-right-open, the time-series of the load over these intervals (x-axis has their start times being the end times of the next interval) forms a right-continuous step-function.

*Service Differentiation Weights:*

Jobs bring different amounts of load at the various resources, depending on their particular service requirements, and therefore their cost contribution needs to be accordingly differentiated. However, explicit load measurements per job cannot be provided at a cloud environment and as such, load differentiation among jobs can only be estimated from available information.

Consider a specific resource, a particular metric and the respective time-series of the active jobs and load, cf. (1 a,b), (2a,b,c) -resource and metric indices are omitted:

$$\left\{ \left[ V(t)_{s,u}, l(t) \right], \qquad \forall s, \forall u, \qquad t = 1..C_B \right\}$$

By means of the completion assumption (described above) the load of a resource during a charging interval is attributed only to the active jobs during this interval. Thus, considering that jobs per service s and user *u* bring the same demand, say $\beta_{s,u}$, the following equations hold:

*job - demand equations; same demand per service and user:*

$$\sum_{s,u} V(t)_{s,u} \beta_{s,u} = l(t), \qquad t = 1..C_B \qquad\qquad (3a)$$

The above constitutes a system of linear equations with unknowns $\{\beta_{s,u} \,\forall s, \forall u\}$. Given the underlying assumptions, the yielded loads per service and user, if a solution exists, are treated as weights for relatively differentiating the jobs according to their induced load, not as their load per se.

Being of statistical nature -the coefficients $V(t)_{s,u}$'s are observations of random variables- the job-demand equations are considered as traces rather than as constraints. As such, the system cannot be inconsistent. Mathematically speaking, if the coefficient matrix is of full column rank a least squares solution (minimizing the error over all equations) can always be determined, otherwise, some of the unknowns will be undetermined, and an infinitum of solutions exists. The mathematical condition of full column rank means that a solution can be found if:

a) *more equations-traces than unknowns:* the number of distinct service and user pairs is at least the number of charging intervals, and
b) *columns are linearly independent:* the jobs per service and user appear independently of each other i.e. the appearance of jobs per service and user does not follow the appearance of jobs from other services and users.

If one of the above conditions does not hold then the system is said not to include sufficient information for admitting a single (least squares) solution. If so, a new linear system is formed by aggregating jobs per service and customer (over all users of the customers) -note that user semantics include customer information (see above in the present document). If still a single solution cannot be determined, jobs are finally aggregated per service only (over all customers and their users). If yet, the system at this level is not of sufficient information, the trivial solution that of having all 1's is returned. All these are mathematically depicted by the following:

*job - demand equations; same demand per service and customer:*

$$\sum_{s,c} \left( \sum_{u \in c} V(t)_{s,u} \right) \beta_{s,c} = l(t), \qquad t = 1..C_B \qquad\qquad (3b)$$

$$\beta_{s,u} = \beta_{s,c:u \in c}, \quad \forall s, \forall u$$

*job - demand equations; same demand per service:*

$$\sum_s\left(\sum_u V(t)_{s,u}\right)\beta_s = l(t), \qquad t = 1..C_B \qquad (3c)$$

$$\beta_{s,u} = \beta_s, \quad \forall s, \forall u$$

*trivial solution:*

$$\beta_{s,u} = 1, \quad \forall s, \forall u$$

Evidently, the number of services is less than the number of distinct service and customer pairs which in turn is less than the number of distinct service and user pairs. Therefore, if the first condition (more equations than unknowns) for having a single (least squares) solution does not hold at a specific job aggregation level it will also not hold at the lower levels. However, no such assertions can be made for the second condition (linear independence). Independency might not hold at a specific level but it may hold at lower even higher levels. Intuitively, the likelihood to be independent is increased at lower, more-detailed, levels. However, this depends on the length of the charging intervals e.g. the invocation behaviour of a specific service among different customers may be the same over larger intervals.

Based on the above, in order to select the system to solve for determining the service differentiation weights, the first condition is checked top-down the job aggregation levels and then the second condition bottom-up. There are well-known methods, within the realm of basic linear algebra, for checking linear independence and subsequently determining a least squares solution with their efficient and numerically-stable implementation in emerging Big Data processing platforms being a challenge.

*Cost Contributions for a Single Resource and Metric:*

With reference to the notation introduced above, cost contributions per service and user at a specific resource with respect to the consumption of a particular metric are defined as in the following (resource and metric indices are omitted).

*Proportional sharing:*

*interval - based cost contributions:*

$$w_{s,u}^{(1)} = \sum_r \sum_{t:r(t)=r} p^r(t)\frac{V(t)_{s,u}}{V(t)}\Big/\sum_r P^r \qquad (4a)$$

*range - based cost contributions:*

$$w_{s,u}^{(2)} = \sum_r P^r \frac{V_{s,u}^r}{V^r}\Big/\sum_r P^r \qquad (4b)$$

Evidently, either form satisfies the unity constraint:

$$\sum_{s,u} w_{s,u} = 1$$

As it can be seen, the two forms above differ in the granularity for distributing the cost penalty among the active job according to their relevant presence. The first form does the distribution at a fine time-grain, per charging interval, whereas the second at a grosser time-grain, per load period (union of charging intervals belonging to the same load range). This is more evident in the case where the penalties per load range are fixed; in this case, the interval-based cost contributions become:

*interval - based cost contributions; fixed penalties:*

$$w_{s,u}^{(1)} = \left[ \sum_r P^r \frac{1}{C^r} \sum_{t:r(t)=r} \frac{V(t)_{s,u}}{V(t)} \right] / \sum_r P^r \qquad (4a1)$$

In the special case where the cost penalties are fixed, all the same and not zero i.e. $p^r(t) = p, P^r = pC^r, r = 1..R$, we have:

*same fixed penalties:*

$$w_{s,u}^{(1)} = \sum_t \frac{V(t)_{s,u}}{V(t)} / C_B$$

$$w_{s,u}^{(2)} = \sum_r C^r \frac{V_{s,u}^r}{V^r} / C_B$$

So, in this case, the first from yields as cost contribution of a specific job the average of the frequencies at which this jobs appears in all charging intervals, whereas the second form yields the weighted average of the frequencies at which this jobs appears in the load periods by the number of the intervals at each load period.

In the particular case of the above case where only one load range is considered not necessarily encompassing all charging intervals of a billing period but a subset of specific $C^1$ heavier-load intervals we have:

*single load range, fixed penalty*

$$w_{s,u}^{(1)} = \frac{1}{C^1} \sum_{t \ in \ range} \frac{V(t)_{s,u}}{V(t)}$$

$$w_{s,u}^{(2)} = V_{s,u}^1 / V^1$$

So, in this case, the first form yields as cost contribution of a specific job the average of the frequencies at which this jobs appears at each charging interval that happens to be in so-defined busy period, whereas the second form yields the overall frequency at which this job appears throughout the busy period.

In case of fixed penalties cf. (4b), (4a1), the defined cost contribution forms are equivalent if the following holds:

*fixed penalties - equivalence condition*

$$\frac{1}{C^r} \sum_{t:r(t)=r} \frac{V(t)_{s,u}}{V(t)} = \frac{V_{s,u}^r}{V^r} \qquad r = 1..R$$

That is, if the average frequency of a particular job across all charging intervals of a load period is equal to the frequency of the job during the whole load period. A sufficient condition for this to hold is the total occurrences per interval, $V(t)$'s, to be all equal.

Considering that the appearance frequency of a particular job during a charging interval is a random variable, the Laws of Large Numbers guarantee that its average will converge to the true mean as the number of intervals (samples) grow and so to the frequency over a load period if large enough. Thus, we can state that when fixed penalties are considered, the interval-based cost contributions converge to the range-based cost contributions if the number of intervals per load range is large enough, that is, the equivalence condition holds asymptotically:

*fixed penalties - asymptotics:*

$$w_{s,u}^{(1)} \xrightarrow{a.s.} w_{s,u}^{(2)}, \quad as \ C^r \to \infty, \ r = 1..R$$

*fixed penalties - conjecture*

$$\left\| w_{s,u}^{(1)} \right\| \geq \left\| w_{s,u}^{(2)} \right\|$$

Since the second form is rather a limit of the first form, it makes sense to adopt the first form on grounds of capturing temporal accuracy during billing periods, provided of course that the charging intervals are large enough so as the distribution of job presence is statistically similar among them. If this is not the case, the second form is preferred in order to overcome temporal statistical deviations. The decision as to which form to use can thus be automatically determined by the cost attribution algorithm in accordance to the self-made adjustments of the charging granularity (describe further below).

Note that in the case of load-dependent periods the above asymptotic behaviour does not hold since the sequence of $p^r(t)$'s may not converge for t.

*Weighted-proportional sharing:*

Compared to the previous case, job frequencies are replaced by the relative total weights of the jobs -relative total service demand brought into the infrastructure per job:

$$\frac{\beta_{s,u} V(t)_{s,u}}{\sum_{s,u} \beta_{s,u} V(t)_{s,u}} \xleftarrow{replaced\ by} \frac{V(t)_{s,u}}{V(t)}$$

$$\frac{\beta_{s,u} V_{s,u}^r}{\sum_{s,u} \beta_{s,u} V_{s,u}^r} \xleftarrow{replaced\ by} \frac{V_{s,u}^r}{V^r}$$

As previously, relative total weights can be calculated per distinct charging interval or per load period. So, we have:

*interval - based cost contributions:*

$$w_{s,u}^{(1)} = \sum_r \sum_{t:r(t)=r} p^r(t) \frac{\beta_{s,u} V(t)_{s,u}}{\sum_{s,u} \beta_{s,u} V(t)_{s,u}} \Big/ \sum_r P^r \qquad (5a)$$

*range - based cost contributions:*

$$w_{s,u}^{(2)} = \sum_r P^r \frac{\beta_{s,u} V_{s,u}^r}{\sum_{s,u} \beta_{s,u} V_{s,u}^r} \Big/ \sum_r P^r \qquad (5b)$$

Evidently, when all service differentiation weights $\beta_{s,u}$'s are equal i.e. all jobs weight and cost the same, the above formulae reduce to the ones of the previous case. The following special cases are worth-stated.

*interval - based cost contributions; fixed penalties:*

$$w_{s,u}^{(1)} = \left[ \sum_r P^r \frac{1}{C^r} \sum_{t:r(t)=r} \frac{\beta_{s,u} V(t)_{s,u}}{\sum_{s,u} \beta_{s,u} V(t)_{s,u}} \right] \Big/ \sum_r P^r$$

*same fixed penalties:*

$$w_{s,u}^{(1)} = \sum_t \frac{\beta_{s,u} V(t)_{s,u}}{\sum_{s,u} \beta_{s,u} V(t)_{s,u}} \Big/ C_B$$

$$w_{s,u}^{(2)} = \sum_r C^r \frac{\beta_{s,u} V_{s,u}^r}{\sum_{s,u} \beta_{s,u} V_{s,u}^r} / C_B$$

*single load range, fixed penalty*

$$w_{s,u}^{(1)} = \frac{1}{C^1} \sum_{t \ in \ range} \frac{\beta_{s,u} V(t)_{s,u}}{\sum_{s,u} \beta_{s,u} V(t)_{s,u}}$$

$$w_{s,u}^{(2)} = \frac{\beta_{s,u} V_{s,u}^1}{\sum_{s,u} \beta_{s,u} V_{s,u}^1}$$

Similarly to the previous case, the two expressions of cost contributions asymptotically converge for large load periods in case of fixed penalties.

*Aggregating Cost Contributions:*

The cost contributions as calculated by (4a,b, 5a,b) are at the most granular level: per service, user and resource. Being percentages they cannot be added unless they refer to the same kind of computational cost. As such, for yielding the contribution of a specific group of services and/or users to a particular kind of computational cost over a set of resources, the respective cost contributions can be added. With reference to the notation introduced previously in this document we have:

*Cost contribution of sets of services S and users U for a set of resources E:*

$$^{E,m}w_{S,U} = \sum_{e \in E} \sum_{\substack{s \in S \\ u \in U}} {}^{e,m}w_{s,u} \qquad (6a)$$

*Algorithm Outline:*

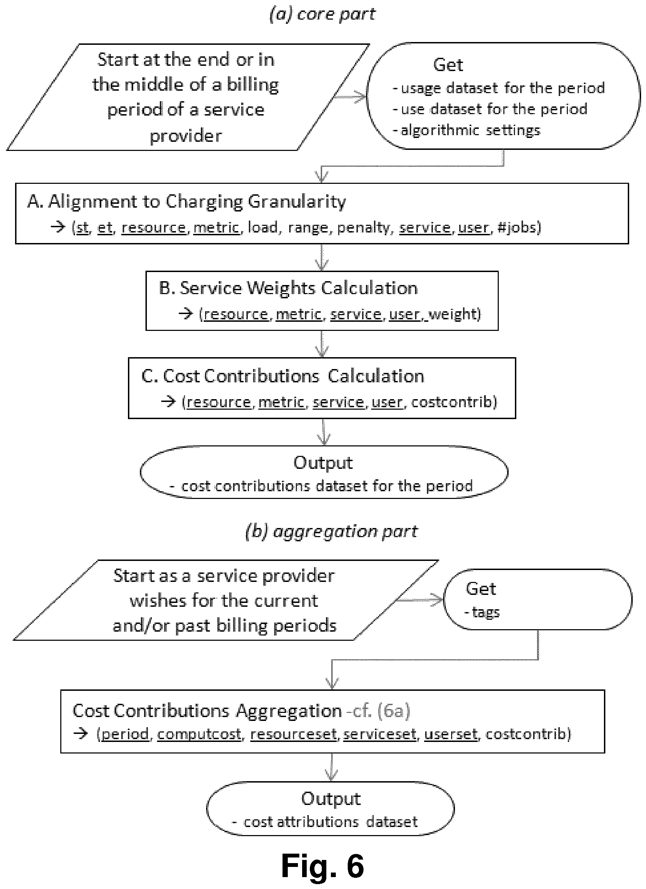

Figure 6 summarizes the previous by presenting the outline of the cost attribution algorithm, for an embodiment. Two parts are distinguished: the core part (view (a)) resulting in individual cost contributions per resource, service, user/customer (described above) and the aggregation part (view (b)) yielding the contributions of specific groups of services, users/customers to the computational cost of particular sets of resources (described above).Their efficient implementation in the Spark distributed processing platform (described below) adds to the innovative aspects of the present invention.

The core of the cost attribution algorithm can run in a batch (for an entire billing period) or an on-line, incremental (at several times during a billing period e.g. daily) fashion. In the latter case, since the calculation of cost contributions is not associative the corresponding part (see step C) needs to re-run every time from the beginning of the billing period. So does the part for calculating the service differentiation weights (step B).

As shown in Figure 6(a), the core part comprises getting cloud usage and service use dataset for the period, together with algorithmic settings, as described above in the present document, and continues with step A for alignment to charging granularity where a loads-jobs time-series is created, then step B for service weights calculation where a weights database is created, then step C for cost contributions calculation where individual cost contributions per resource, service, user/customer are calculated.

Regarding the aggregation part of the algorithm, as indicated in Figure 6(b), it starts for the current and/or past billing periods, and comprises getting those tags described above in the present document, and continues by performing a cost contributions aggregation according to equation (6a) above, to output a cost attributions dataset.

As stated above in this document, for alternative embodiments, other type of periods, shorter or longer than the billing period, can be used in an equivalent manner to what is explained herein for the billing period.

*Discussion on Charging Granularity:*

The choice of the granularity of the charging intervals so that the completion assumption holds (see above) is central to the present invention and therefore a significant condition affecting the credibility of the yielded cost contributions.

As the charging granularity gets larger the completion assumption becomes true and reversely thinner charging granularities are likely to make the completion assumption invalid. The length of charging granularity should also be seen under the perspectives of the load ranges which are introduced for differentiating cost sharing based on peak-loads. If charging intervals are large enough peak loads may be diluted by the calculations for deriving the aggregate load (see above). The choice therefore of the optimal charging granularity is a trade-off between the validity of the completion assumption and the loss of peak-load information.

Information on the duration of each job executed during a billing period would be helpful however this cannot be a priori known while is hard to measure from system statistics -very complex mappings between user submitted jobs and system processes/threads are required which outmost depend on the specificities of the architecture of the particular software system in place. Furthermore, it cannot be taken for granted that all jobs of the same service will have the same execution times in an empty machine since execution times depend on input and therefore on user behaviour.

The above discussion indicates that the optimal setting of the charging granularity could only be determined through benchmark tests in particular provider environments. And, based on the benchmark results, the optimal setting of the charging granularity could be automated through appropriate ML techniques.

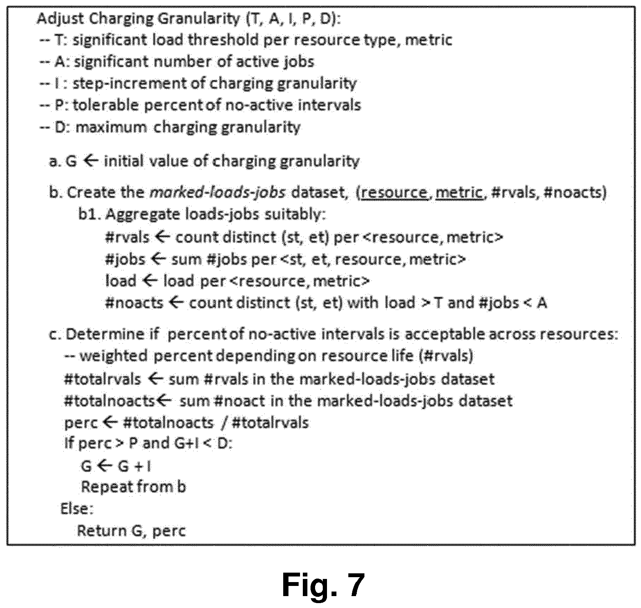

A criterion for dynamically adjusting the charging granularity could be the proportion of the charging intervals with significant load but with no (or very small number of) active jobs. Such intervals indicate that the completion assumption does not hold and therefore the charging granularity should increase. Along this line, Figure 7 outlines a suitable algorithm for setting the charging granularity. This algorithm could run as a part of a training phase for getting an initial estimate of the charging granularity as well as alongside the cost attribution algorithm (in block A of Figure 6(a)) for verifying the validity of the initial estimate and recalculating cost contributions if new estimates deem more valid.

The meaning of each step of the algorithm of Figure 7 and of the terminology used is described in the same Figure 7 (by the corresponding legends included therein), which shows how granularity G is increased (under the constraint that G+1 be below than a maximum charging granularity D) when the percentage of no-active intervals (i.e. without active jobs) is above a tolerable percentage indicated by P.

*Output Information:*

Table 3 specifies the output information of the cost attribution algorithm, for the embodiments described in the present section. Two datasets are produced:

- one with the individual cost contributions per service, user/customer and resource, resulted from the core part (Figure 6(a)) of the algorithm, and
- one with the aggregate cost contributions per wished group of services, users/ customers or resources, resulted from the aggregation part (Figure 6(b)) of the algorithm.

**Table 3: Output information of the cost attribution algorithm**

| per service provider | |
|---|---|
| per billing period | data fields (keys underlined) |
| Cost Contributions Dataset | (period, resource, metric, service, user/customer, cost contribution) |
| Aggregate Cost Contributions Dataset | (period, computational cost category, resource set, service set, user/customer set, aggregate cost contribution) |

System Architecture:

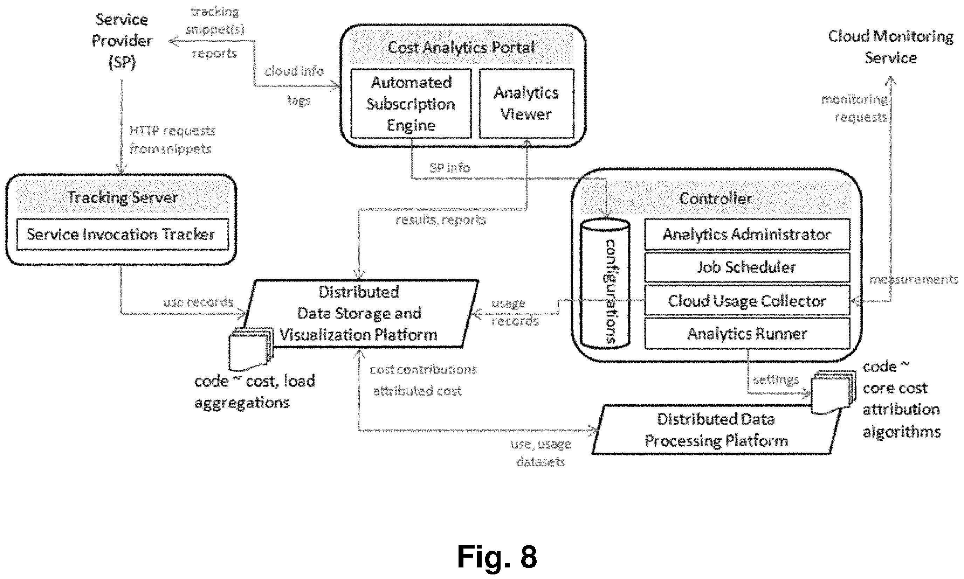

With reference to the functional architecture presented above with reference to Figure 4, Figure 8 provides an overall system view depicting the main computational blocks implementing the specified functionality, while Table 4 presents the underlying implementation technologies.

The system will run at a remote computing system providing on a subscription basis its cost analytics as-a-service to various cloud-hosted SaaS, in order to allow them to use the provided information to perform the optimization of the operation of the cloud hosted SaaS system (as described above), or, optionally, also to perform optimization actions and/or create and provide optimization advices.

The legends included in Figure 8 identify the different entities or sub-systems involved in the system of the invention and also describe the actions implemented thereby and indicate the data communication between them (by means of the depicted arrow lines and terms included thereon) according to the method of the present invention, which have been described above in the present document.

### Table 4: System technologies

| Sub-system | Implementation Technology | External Interface |
|---|---|---|
| Cost Analytics Portal | Drupal | HTTP |
| Tracking Server | Spring Boot | Restful HTTP |
| Distributed Data Storage and Virtualization Platform | Elasticsearch Logstash Kibana | |
| Distributed Data Processing Platform | Apache Spark Livy for Restful HTTP access | |
| Cost Attribution Algorithms | Python | |
| Controller | Spring Framework, Qartz for scheduling MariaDB for DB Google gcloud, Stackdriver APIs | |

A person skilled in the art could introduce changes and modifications in the embodiments described without departing from the scope of the invention as it is defined in the attached claims.

References:

[1] A. Bousia, E. Kartsakli, A. Antonopoulos, L. Alonso, C. Verikoukis, "Sharing the Small Cells for Energy Efficient Networking: How much does it cost?", Procs of GLOBECOM'14, pp. 2649-2654, 2014.

[2] L. Gyarmati, R. Stanojevic, M. Sirivianos, N. Laoutaris, "Sharing the Cost of Backbone Networks: Cui Bono?',Procs of the 12th ACM SIGCOMM Conf. on Internet Measurement, IMC'12, pp. 509-522, ACM, 2012.

[3] L. Gyarmati, N. Laoutaris, P. Rodriguez, "On Economic Heavy Hitters: Shapley Value Analysis of 95th-Percentile Pricing", Procs of the 10th ACM SIGCOMM Conf. on Internet Measurement, IMC'10, pp.75-80, ACM, 2010.

[4] NetFlow, https://www.cisco.com/c/en/us/products/ios-nx-os-software/ios-netflow/index.html

[5] Stackdriver, https://cloud.google.com/monitoring/api/v3/

[6] Metricbeat, https://www.elastic.co/guide/en/beats/metricbeat/5.2/index.html

[7] Cloud Cruiser, https://www.cloudcruiser.com/

[8] Cloudyn, https://www.cloudyn.com/

[9] Cloudability, https://www.cloudability.com/
[10] Talligent, https://www.talligent.com/

**Claims**

1. A computer implemented method for optimizing the operation of a cloud hosted software as a service (SaaS) system, wherein a SaaS provider computing system is operatively connected as a bridge between a cloud provider computing system and at least one customer computing system, to provide to at least one customer with SaaS services associated at least to software applications deployed in the cloud provider computing system, the method comprising performing the following steps:

   a) monitoring cloud resource usage regarding said cloud provider computing system, to detect cloud resource load consumption;
   b) detecting service usage regarding said applications; and
   c) binding the detected cloud resource load consumption with the detected service usage, and determining associated cost contributions based on respective load contributions obtained from said binding, to optimize the operation of the cloud hosted SaaS system based on the determined cost contributions.

2. A method according to claim 1, wherein the method is applied to a plurality of customers, being provided with the SaaS services through respective customer computing systems operatively connected to the SaaS provider computing system, said step b) comprising automatically detecting service usage for each of said customers, and said step c) comprising automatically binding the detected cloud resource consumption with the detected service usage for each customer, to determine and associate cost contributions to services and customers.

3. A method according to claim 2, comprising performing said step b) by embedding at least one tracking code to service provisioning web pages through which the SaaS is provided to the customers, to capture at least customer identifying information of customers accessing said web pages to track application usage for each customer.

4. A method according to claim 3, wherein:

   - step a) comprises obtaining cloud resource load time-series per cloud resource;
   - step b) comprises capturing service invocation time-series by customers, including said customer information;
   - step c) comprises aligning said cloud resource load time-series with said service invocation time-series within a common time resolution so that services arrived for execution within this resolution complete their execution within this resolution, and calculating the cost contributions per service and customer based on information available during the intervals of the considered resolution in the aligned time-series.

5. A method according to claim 4, wherein said service invocation time-series also includes identifying information regarding the SaaS provider computing system, the service of the SaaS provider computing system invoked by a customer, the time the service was invoked, and the user who invoked the service, including said customer information.

6. A method according to claim 4 or 5, comprising performing said cost contribution calculation for different load ranges through respective different cost penalty functions.

7. A method according to claim 6, comprising distributing the cost penalty of said different cost penalty functions among active services of said customers, at least proportionally to their relative presence in the detections performed at step b), according to a proportional sharing approach.

8. A method according to claim 7, comprising distributing the cost penalty of the different cost penalty functions among active services of the customers, also based on the demand said active services bring to the cloud resources in the detections performed at step b), according to a weighted-proportional sharing approach.

9. A method according to any of claims 3 to 8, wherein said at least tracking code is at least one of a platform-specific service page snippet, a skeleton service page snippet to be completed at the SaaS provider computing system, a service page snippet conveying user UUIDs (universally unique identifiers), and a log-in snippet conveying user UUIDs and email binding.

10. A method according to claim 4 or to any of claims 5 to 9 when depending on claim 4, comprising obtaining said service invocation time-series by mapping said service invocations into a series of time intervals based on the service invocations chronological order, on their execution time, on a lag between service invocation and execution, and on the length and time location of said intervals.

11. A method according to claim 4 or to any of claims 5 to 10 when depending on claim 4, comprising obtaining said cloud resource load time-series from measurement data, regarding one or more metrics of one or more of said cloud resources, included in said time intervals.

12. A method according to any of the previous claims, comprising performing said optimization of the operation of the cloud hosted SaaS system based on the determined cost contributions at step c), wherein said optimization comprises at least one of the following actions:

- cloud resource remapping of the detected services;
- improvement of the implementation of services provided by the SaaS provider computing system; and
- reconfiguration of the network connections between the cloud provider computing system and the at least one customer computing system, through the SaaS provider computing system.

13. A method according to claim 12, comprising using the information obtained at step c) to detect software bugs and/or intrusion DoS attacks, and based on the results of said detections performing said improvement of the implementation of services provided by the SaaS provider computing system.

14. A computer program, comprising code instructions that when run in one or more processors implement the method of any of the previous claims.

15. A system for optimizing the operation of a cloud hosted software as a service (SaaS) system, wherein a SaaS provider computing system is operatively connected as a bridge between a cloud provider computing system and at least one customer computing system, to provide to at least one customer with SaaS services associated at least to software applications deployed in the cloud provider computing system, the system being adapted to implement the method of any of claims 1 to 13, for which purpose the system comprises:

- monitoring means for performing step a);
- detection means for performing step b); and
- processing means for performing step c).

Fig. 1

Fig. 2

Fig. 3

**Fig. 4**

Fig. 5

*(a) core part*

```
┌──────────────────────────┐      ╭──────────────────────────────╮
│ Start at the end or in   │      │          Get                 │
│ the middle of a billing  │─────▶│ - usage dataset for the period│
│ period of a service      │      │ - use dataset for the period  │
│ provider                 │      │ - algorithmic settings        │
└──────────────────────────┘      ╰──────────────────────────────╯
```

**A. Alignment to Charging Granularity**
→ (st, et, resource, metric, load, range, penalty, service, user, #jobs)

**B. Service Weights Calculation**
→ (resource, metric, service, user, weight)

**C. Cost Contributions Calculation**
→ (resource, metric, service, user, costcontrib)

**Output**
- cost contributions dataset for the period

*(b) aggregation part*

```
┌──────────────────────────┐      ╭──────────────╮
│ Start as a service       │      │    Get       │
│ provider wishes for the  │─────▶│  - tags      │
│ current and/or past      │      │              │
│ billing periods          │      ╰──────────────╯
└──────────────────────────┘
```

**Cost Contributions Aggregation** -cf. (6a)
→ (period, computcost, resourceset, serviceset, userset, costcontrib)

**Output**
- cost attributions dataset

# Fig. 6

Adjust Charging Granularity (T, A, I, P, D):
-- T: significant load threshold per resource type, metric
-- A: significant number of active jobs
-- I : step-increment of charging granularity
-- P: tolerable percent of no-active intervals
-- D: maximum charging granularity

 a. G ← initial value of charging granularity

 b. Create the *marked-loads-jobs* dataset, (resource, metric, #rvals, #noacts)
     b1. Aggregate loads-jobs suitably:
         #rvals ← count distinct (st, et) per <resource, metric>
         #jobs ← sum #jobs per <st, et, resource, metric>
         load ← load per <resource, metric>
         #noacts ← count distinct (st, et) with load > T and #jobs < A

 c. Determine if percent of no-active intervals is acceptable across resources:
     -- weighted percent depending on resource life (#rvals)
     #totalrvals ← sum #rvals in the marked-loads-jobs dataset
     #totalnoacts ← sum #noact in the marked-loads-jobs dataset
     perc ← #totalnoacts / #totalrvals
     If perc > P and G+I < D:
        G ← G + I
        Repeat from b
     Else:
        Return G, perc

# Fig. 7

Fig. 8

Europäisches
Patentamt

European
Patent Office

Office européen
des brevets

## EUROPEAN SEARCH REPORT

Application Number

EP 17 19 9753

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2016/094401 A1 (ANWAR ALI [US] ET AL)<br>31 March 2016 (2016-03-31)<br>* abstract; figures 1, 2A, 2B, 4-19 *<br>* paragraphs [0005], [0006], [0008] *<br>* paragraphs [0029] - [0033] *<br>* paragraphs [0043] - [0050] *<br>* paragraphs [0062] - [0073] *<br>* paragraphs [0079] - [0082] *<br>* paragraphs [0117] - [0129] *<br>* paragraphs [0165] - [0187] *<br>----- | 1,2,14,<br>15<br>3-13 | INV.<br>G06Q10/06 |
| X<br>Y | US 2015/120920 A1 (FERRIS JAMES MICHAEL<br>[US] ET AL) 30 April 2015 (2015-04-30)<br>* abstract; figures 1-7 *<br>* paragraphs [0016] - [0031] *<br>* paragraphs [0037] - [0040] *<br>----- | 1,2,14,<br>15<br>3-13 | |
| X<br>Y | US 2011/145413 A1 (DAWSON CHRISTOPHER J<br>[US] ET AL) 16 June 2011 (2011-06-16)<br>* abstract; claims 1, 8; figures 2-6 *<br>* paragraphs [0021] - [0029] *<br>* paragraphs [0038] - [0056] *<br>----- | 1,2,14,<br>15<br>3-13 | TECHNICAL FIELDS SEARCHED (IPC)<br><br>G06Q<br>G06F |
| X<br>Y | US 2015/358349 A1 (HOLDEN RUSSELL L [US]<br>ET AL) 10 December 2015 (2015-12-10)<br>* abstract; figures 1-8 *<br>* paragraphs [0012], [0045] - [0051],<br>[0053], [0061] *<br>* paragraphs [0065] - [0081] *<br>----- | 1,2,14,<br>15<br>1-13 | |
| X<br>Y | US 2014/214755 A1 (AGUIAR GLAUCIMAR DA<br>SILVA [BR] ET AL)<br>31 July 2014 (2014-07-31)<br>* abstract; figures 1-7 *<br>* paragraphs [0016] - [0031], [0036],<br>[0041] *<br>-----<br>-/-- | 1,2,14,<br>15<br>3-13 | |

The present search report has been drawn up for all claims

| Place of search | Date of completion of the search | Examiner |
|---|---|---|
| Munich | 26 March 2018 | Mülthaler, Evelyn |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

# EUROPEAN SEARCH REPORT

Application Number

EP 17 19 9753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/074659 A1 (CHATTERJEE RAMKRISHNA [US] ET AL) 13 March 2014 (2014-03-13) * paragraphs [0008], [0033] - [0037], [0041], [0042], [0046], [0048], [0050], [0053] * * paragraphs [0055] - [0057] * ----- | 1-15 | |
| Y | US 2015/341230 A1 (DAVE KEDAR [US] ET AL) 26 November 2015 (2015-11-26) * abstract; figures 1, 3A, 5, 20 * * paragraphs [0018], [0049], [0050], [0055] - [0058] * * paragraphs [0083] - [0088] * ----- | 1-15 | |
| Y | US 2016/112375 A1 (COHEN AVIRAM [IL] ET AL) 21 April 2016 (2016-04-21) * abstract; figures 3, 11, 13-15 * * paragraphs [0149] - [0176] * * claims 3-8 * ----- | 1-15 | |
| A | US 2011/313896 A1 (NUGGEHALLI JAYASIMHA [US] ET AL) 22 December 2011 (2011-12-22) * the whole document * ----- | 1-15 | TECHNICAL FIELDS SEARCHED (IPC) |

The present search report has been drawn up for all claims

| Place of search | Date of completion of the search | Examiner |
|---|---|---|
| Munich | 26 March 2018 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 17 19 9753

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2018

| Patent document cited in search report | Publication date | Patent family member(s) | Publication date |
|---|---|---|---|
| US 2016094401 A1 | 31-03-2016 | NONE | |
| US 2015120920 A1 | 30-04-2015 | US 2011295998 A1<br>US 2015120920 A1 | 01-12-2011<br>30-04-2015 |
| US 2011145413 A1 | 16-06-2011 | NONE | |
| US 2015358349 A1 | 10-12-2015 | US 2015195303 A1<br>US 2015358349 A1<br>US 2016021136 A1<br>US 2016021138 A1<br>US 2017078325 A1 | 09-07-2015<br>10-12-2015<br>21-01-2016<br>21-01-2016<br>16-03-2017 |
| US 2014214755 A1 | 31-07-2014 | NONE | |
| US 2014074659 A1 | 13-03-2014 | US 2014074540 A1<br>US 2014074659 A1<br>US 2014074788 A1<br>US 2014074999 A1<br>US 2014075016 A1<br>US 2014075027 A1<br>US 2014075031 A1<br>US 2014075499 A1<br>US 2014143083 A1<br>US 2015156218 A1<br>US 2016028581 A1<br>US 2016070772 A1<br>US 2017230235 A1 | 13-03-2014<br>13-03-2014<br>13-03-2014<br>13-03-2014<br>13-03-2014<br>13-03-2014<br>13-03-2014<br>13-03-2014<br>22-05-2014<br>04-06-2015<br>28-01-2016<br>10-03-2016<br>10-08-2017 |
| US 2015341230 A1 | 26-11-2015 | NONE | |
| US 2016112375 A1 | 21-04-2016 | AU 2014346390 A1<br>CA 2930106 A1<br>CN 106031118 A<br>EP 3069494 A1<br>JP 2017504092 A<br>KR 20160110913 A<br>PH 12016500808 A1<br>RU 2016117971 A<br>SG 11201603471X A<br>US 2015135302 A1<br>US 2016112375 A1<br>WO 2015070260 A1 | 19-05-2016<br>14-05-2015<br>12-10-2016<br>21-09-2016<br>02-02-2017<br>22-09-2016<br>13-06-2016<br>15-11-2017<br>30-05-2016<br>14-05-2015<br>21-04-2016<br>14-05-2015 |
| US 2011313896 A1 | 22-12-2011 | JP 2012003767 A<br>JP 2016015777 A | 05-01-2012<br>28-01-2016 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 17 19 9753

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2018

| Patent document cited in search report | Publication date | Patent family member(s) | | Publication date |
|---|---|---|---|---|
| | | US | 2011313896 A1 | 22-12-2011 |
| | | US | 2015358502 A1 | 10-12-2015 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. BOUSIA ; E. KARTSAKLI ; A. ANTONOPOULOS ; L. ALONSO ; C. VERIK-OUKIS.** Sharing the Small Cells for Energy Efficient Networking: How much does it cost?. *Procs of GLOBECOM'14,* 2014, 2649-2654
- Sharing the Cost of Backbone Networks: Cui Bono?. **L. GYARMATI ; R. STANOJEVIC ; M. SIRIVIANOS ; N. LAOUTARIS.** Procs of the 12th ACM SIGCOMM Conf. on Internet Measurement, IMC'12. ACM, 2012, 509-522
- On Economic Heavy Hitters: Shapley Value Analysis of 95th-Percentile Pricing. **L. GYARMATI ; N. LAOUTARIS ; P. RODRIGUEZ.** Procs of the 10th ACM SIGCOMM Conf. on Internet Measurement, IMC'10. ACM, 2010, 75-80